# EUROPÄISCHE PATENTANMELDUNG

(11) **EP 3 021 255 A1**
(43) Veröffentlichungstag der Anmeldung: **18.05.2016**
(21) Anmeldenummer: 14192673.3
(22) Anmeldetag: 11.11.2014
(51) Int. Cl.: G06K 7/00, G06K 19/077

(54) **Identifikationsmarke zum Anbringen an einem metallurgischen Gefäß, Lesestation und Verfahren zur Ermittlung eines Verschleißzustandes der Identifikationsmarke**

(71) Anmelder: Primetals Technologies Austria GmbH, 4031 Linz (AT)
(72) Erfinder: Kuehas, Thomas, 4225 Luftenberg (AT); Rohrhofer, Andreas, 4020 Linz (AT); Hartl, Franz, 4020 Linz (AT)
(74) Vertreter: Metals@Linz

(57) **Zusammenfassung**

Die Erfindung betrifft eine Identifikationsmarke (1, 1', 1") zum Anbringen an einem metallurgischen Gefäß (2), wobei die Identifikationsmarke (1, 1', 1") eine Trägermatrix (11) aufweist, in welche mindestens zwei passive Transponder (3, 3a, 3b) eingebettet angeordnet sind, und wobei die mindestens zwei passiven Transponder (3, 3a, 3b) auf einer Ebene (10) und/oder in unterschiedlichen Ebenen (10a, 10b) des Identifikationsmarke (1, 1', 1") angeordnet sind. Die Erfindung betrifft weiterhin eine Lesestation (4) und ein Verfahren zur Ermittlung eines Verschleißzustandes der Identifikationsmarke (1, 1', 1").

## Beschreibung

Die Erfindung betrifft eine Identifikationsmarke zum Anbringen an einem metallurgischen Gefäß, wobei die Identifikationsmarke eine Trägermatrix mit passivem Transponder aufweist. Die Erfindung betrifft weiterhin ein metallurgisches Gefäß mit einer derartigen Identifikationsmarke, eine Lesestation zum Auslesen des passiven Transponders der Identifikationsmarke an dem metallurgischen Gefäß angeordnet ist, sowie ein Verfahren zur Ermittlung eines Verschleißzustandes der Identifikationsmarke an dem metallurgischen Gefäß.

In metallurgischen Industrieanlagen werden metallurgische Gefäße eingesetzt um Roheisenschmelzen, Stahlschmelzen, flüssige Schlacke, Schrott und dergleichen zu transportieren. Zum Beispiel sind in einem Stahlwerk in verschiedenen Anlagenteilen mehrere Gefäße im Einsatz. Je nach Kapazität des Stahlwerks können dabei 30 und mehr Gefäße gleichzeitig im Einsatz sein. Diese durchlaufen verschiedene Routen zwischen den unterschiedlichen Anlagenteilen. Ein Anlagenbediener oder Kranfahrer hat dabei sicherzustellen, dass ein bestimmtes Gefäß an den richtigen Ort verbracht und in Folge bestimmungsgemäß eingesetzt oder gelagert wird.

Sowohl unter dem Gesichtspunkt der Qualität (möglichst geringe Abkühlung des Roheisen/Stahlbades im Gefäß) als auch aus Energiespargründen wird ein möglichst hoher Heißeinsatz von Gefäßen angestrebt. Die Gefäße in einem Stahlwerk werden z.B. beheizt, bevor Stahl aus dem Elektrolichtbogenofen eingefüllt wird. Zudem wird vermieden, bestimmte Stahlqualitäten nacheinander in demselben Gefäß zu transportieren, da die darin verbleibenden geringen Restmengen an Schmelze oder Metall der letzten Befüllung die Zusammensetzung der Metallschmelze der nachfolgenden Befüllung chemisch beeinflussen können. Dies ist z.B. bei bestimmten Edelstahlgüten der Fall.

Aus diesem Grund werden die eingesetzten metallurgischen Gefäße mit Identifikationsmarken, insbesondere enthaltend spezielle Transponder, ausgestattet. Mithilfe dieser Identifikationsmarken können die sich im Einsatz befindlichen metallurgischen Gefäße an verschiedenen Nachverfolgungspositionen eindeutig erkannt und identifiziert werden.

Die Identifikationsmarken für metallurgische Gefäße werden entweder fest mit dem zu identifizierenden Behälter verschweißt oder durch eine lösbare Schraubverbindung mit diesem verbunden. Durch den Transport der Gefäße werden die Identifikationsmarken oftmals beschädigt oder von dem zu identifizierenden metallurgischen Gefäß abgerissen. Die zur Identifizierung notwendigen Identifikationsmarken müssen aus diesem Grund immer wieder erneuert oder ausgetauscht werden.

Aufgrund der herrschenden rauen Bedingungen in metallurgischen Industrieanlagen kommt es nicht nur aufgrund mechanischer Beanspruchung der Identifikationsmarken, sondern auch aufgrund der Anordnung der Identifikationsmarken an den heißen Gefäßen zu einer thermischen Beanspruchung, die zu Ausfällen der eingesetzten passiven Transponder führt. Ein derartiger Ausfall eines Transponders führt dazu, dass ein Gefäß nicht mehr automatisch erkannt werden kann.

Aufgabe der Erfindung ist es, eine Identifikationsmarke bereitzustellen, die eine Möglichkeit zur frühzeitigen Erkennung eines Verschleißes und eines drohenden Ausfalls eines enthaltenen Transponders bereitstellt. Weiterhin ist es Aufgabe der Erfindung, ein metallurgisches Gefäß mit einer derartigen Identifikationsmarke, eine Lesestation zum Auslesen der Identifikationsmarke an dem metallurgischen Gefäß sowie ein Verfahren zur Ermittlung eines Verschleißzustandes der Identifikationsmarke an dem metallurgischen Gefäß bereitzustellen.

Die Aufgabe wird für die Identifikationsmarke zum Anbringen an einem metallurgischen Gefäß, wobei die Identifikationsmarke eine Trägermatrix aufweist, dadurch gelöst, dass in die Trägermatrix mindestens zwei passive Transponder eingebettet angeordnet sind, und dass die mindestens zwei passiven Transponder auf einer Ebene und/oder in unterschiedlichen Ebenen der Identifikationsmarke angeordnet sind.

Ein gleichzeitiger Ausfall aller in einer Identifikationsmarke enthaltenen Transponder ist umso unwahrscheinlicher, je mehr Transponder vorhanden sind. Fällt ein Transponder aus einer Mehrzahl an Transpondern aufgrund übermäßiger mechanischer und/oder thermischer Beanspruchung aus, ist mindestens ein redundanter weiterer Transponder vorhanden, der mit hoher Wahrscheinlichkeit noch funktionsfähig ist und aus dem die Daten zur Erkennung und eindeutigen automatischen Identifizierung eines metallurgischen Gefäßes, an dem die Identifikationsmarke angebracht ist, ausgelesen werden können. Das Risiko, dass metallurgische Gefäße aufgrund eines defekten Transponders nicht erkannt und identifiziert werden können, geht damit praktisch gegen Null.

Allerdings kann der Ausfall eines oder mehrerer der in der Identifikationsmarke vorhandenen Transponder einen Hinweis darauf geben, dass ein merklicher Verschleiß eingetreten ist und ein Austausch der Identifikationsmarke vorgenommen werden sollte, bevor schließlich alle Transponder ausfallen.

Die erfindungsgemäße Identifikationsmarke ermöglicht eine Erkennung ihres aktuellen Verschleißzustandes auf Basis einer Erkennung der Anzahl der aktivierbaren und gegebenenfalls Anzahl der nicht mehr aktivierbaren passiven Transponder.

Ein passiver Transponder (= Funk-Kommunikationsgerät) bezieht die zur Abarbeitung interner Prozesse benötigte Energie induktiv aus von außen bereitgestellten elektromagnetischen Feldern, die beispielsweise durch eine Antenne abgestrahlt werden. Somit weisen passive Transponder zwar keine eigene Energieversorgung auf, können aber nur auf kürzeren Distanzen arbeiten. Dabei haben sich alle Arten passiver Transponder, insbesondere aber in Form von RFID-Transpondern wie auch SAW-Transpondern (SAW = Surface Acoustic Waves), als geeignet erwiesen.

Es hat sich bewährt, wenn die mindestens zwei passiven Transponder beabstandet nebeneinander auf einer Ebene der Identifikationsmarke angeordnet sind. Diese Anordnung ist besonders bei einer einseitigen mechanischen Belastung der Identifikationsmarke aussagefähig, da in einem solchen Fall meist nur einer der Transponder ausfällt.

Bevorzugt sind mindestens zwei Ebenen vorhanden, wobei pro Ebene mindestens ein passiver Transponder angeordnet ist. Diese Anordnung eignet sich insbesondere bei frontaler mechanischer Beanspruchung oder hoher thermischer Belastung von Seiten des Gefäßes.

Vorzugsweise sind weiterhin mindestens zwei Ebenen vorhanden, wobei pro Ebene mindestens zwei passive Transponder beabstandet nebeneinander angeordnet sind. Diese Anordnung deckt sowohl den Fall einer einseitigen thermischen Belastung wie auch die Fälle einseitiger oder frontaler mechanischer Belastung zuverlässig ab.

Insbesondere sind aber mindestens drei passive Transponder vorhanden. Dabei sind bevorzugt je drei Transponder auf zwei unterschiedlichen Ebenen der Identifikationsmarke angeordnet.

Eine derartige Ausgestaltung gewährleistet die Funktionsfähigkeit zumindest eines Transponders auch bei hohen thermischer und/oder mechanischer Beanspruchung der Identifikationsmarke.

Die Trägermatrix der Identifikationsmarke ist vorzugsweise aus einem elektrisch und/oder thermisch isolierenden Material gebildet.

In einer bevorzugten Ausgestaltung der Identifikationsmarke ist deren Trägermatrix aus einzelnen Lagen aufgebaut, wobei eine Ebene sich zwischen zwei benachbarten Lagen der Trägermatrix befindet, und wobei mindestens zwei Lagen der Trägermatrix eine unterschiedliche Dicke aufweisen. So ist es bevorzugt, zwischen dem metallurgischen Gefäß und einem Transponder die dickste Lage der Trägermatrix, insbesondere aus einem wärmeisolierendem Material, wie beispielsweise Glasfaserplatten, Holz usw., anzuordnen, um den Wärmeübergang vom Gefäß zum Transponder möglichst zu begrenzen.

Die Aufgabe wird für das metallurgische Gefäß, das eine äußere Oberfläche aufweist, dadurch gelöst, dass eine erfindungsgemäße Identifikationsmarke an der äußeren Oberfläche angeordnet ist. Die mindestens zwei Transponder der Identifikationsmarke gewährleisten eine automatische Verschleißerkennung und stellen sicher, dass das metallurgische Gefäß jederzeit sicher erkannt und identifiziert werden kann.

Insbesondere weist die Identifikationsmarke des metallurgischen Gefäßes eine Trägermatrix mit mehreren Lagen auf, wobei die Dicke der Lagen mit zunehmendem Abstand von der äußeren Oberfläche abnimmt. Bei Einsatz einer Trägermatrix aus einem wärmeisolierenden Material gewährleistet dies eine weitgehende Abschirmung der Abwärme des Gefäßes von den passiven Transpondern.

Die Aufgabe wird weiterhin für die Lesestation zum Auslesen der mindestens zwei passiven Transponder einer Identifikationsmarke, welche an einem erfindungsgemäßen metallurgischen Gefäß angeordnet ist, gelöst, indem die Lesestation mindestens eine Antenne, eine Leseeinheit zur Erkennung der mindestens zwei passiven Transponder und eine Auswerteeinheit zur Ermittlung und Ausgabe eines Verschleißzustandes der Identifikationsmarke aufweist.

Die Lesestation ermöglicht eine schnelle und unkomplizierte automatische Erkennung der aktivierbaren und der eventuell nicht aktivierbaren passiven Transponder und erfasst damit den aktuellen Verschleißzustand einer Identifikationsmarke. Dies ermöglicht einen rechtzeitigen Austausch der Identifikationsmarke und damit einen durchgehend störungsfreien Betrieb des metallurgischen Gefäßes.

Die Auswerteeinheit weist dabei vorzugsweise eine Anzeigeeinheit zur Anzeige des ermittelten Verschleißzustandes der Identifikationsmarke auf. Dies ermöglicht dem Bedienpersonal ein rechtzeitiges Eingreifen.

Die Auswerteeinheit ist vorzugsweise weiterhin datentechnisch mit einem Managementsystem verbunden, in welchem ein Einsatz- und Fahrplan für das metallurgische Gefäß hinterlegt ist. Dies ermöglicht der Lesestation die Ermittlung eines optimalen Zeitpunktes zum Austausch einer Identifikationsmarke und eine entsprechende Ausgabe dieser Information an das Bedienpersonal.

Die Aufgabe wird für das Verfahren zur Ermittlung eines Verschleißzustandes einer Identifikationsmarke, welche an einem erfindungsgemäßen metallurgischen Gefäß angeordnet ist, mittels einer erfindungsgemäßen Lesestation, gelöst, indem
- eine Gesamtanzahl und/oder Ausgangslage der in der Identifikationsmarke vorhandenen passiven Transponder in der Leseeinheit und/oder der Auswerteeinheit hinterlegt wird,
- die mindestens eine Antenne eine Aktivierung der mindestens zwei passiven Transponder initiiert,
- die Leseeinheit die aktivierten passiven Transponder erkennt und ausliest und das Ergebnis an die Auswerteeinheit übermittelt,
- die Auswerteeinheit eine aktuelle Anzahl und/oder aktuelle Lage der aktivierten passiven Transponder in der Identifizierungsmarke ermittelt und mit der Gesamtanzahl und/oder Ausgangslage der vorhandenen passiven Transponder vergleicht, und wobei die Auswerteeinheit bei Vorliegen einer Abweichung zwischen der aktuellen Anzahl und der Gesamtanzahl und/oder der aktuellen Lage und der Ausgangslage der Identifikationsmarke einen definierten Verschleißzustand zuordnet.

Können demnach alle vorhandenen passiven Transponder aktiviert werden, so liegt kein oder nur ein unbedeutender Verschleiß der Identifikationsmarke vor. Die Identifikationsmarke wird als "in Ordnung" eingestuft und weiterverwendet.

Können nicht alle vorhandenen passiven Transponder aktiviert werden, wird von einer Beschädigung der Identifikationsmarke ausgegangen. Die Identifikationsmarke wird als "beschädigt" oder "verschlissen" eingestuft und für einen baldigen Austausch eingeplant. Je mehr der vorhandenen Transponder nicht aktiviert werden können, desto höher wird der Beschädigungsgrad der Identifikationsmarke eingestuft.

Der Verschleißzustand der Identifikationsmarke wird dabei bevorzugt mittels der Anzeigeeinheit ausgegeben. Die Ausgabe erfolgt beispielsweise in Form oder sinngemäß einer Ampelsignalisierung, indem für eine weiterhin funktionsfähige Identifikationsmarke ein "grünes Signal", für eine leicht beschädigte Identifikationsmarke ein "gelbes Signal" und für eine stark beschädigte Identifikationsmarke ein "rotes Signal" ausgegeben wird. So kann eine leicht beschädigte Identifikationsmarke über einen definierten Zeitraum weiterbetrieben werden und nach Ablauf dieses Zeitraums automatisch ein "rotes Signal" oder ein "Austauschkenner" zugeordnet werden, um einen Austausch der Identifikationsmarke auszulösen.

Die Auswerteeinheit ermittelt insbesondere auf Basis des Verschleißzustandes der Identifikationsmarke und des Einsatz- und Fahrplans des metallurgischen Gefäßes weiterhin einen optimalen Termin zum Austausch der Identifikationsmarke und gibt diesen aus.

Die Figuren 1 bis 8 sollen erfindungsgemäße Identifikationsmarken, metallurgische Gefäße und Lesestationen beispielhaft erläutern. So zeigt:
- FIG 1: ein metallurgisches Gefäß mit einer Identifikationsmarke;
- FIG 2: eine Lesestation in Kommunikation mit der Identifikationsmarke gemäß FIG 1;
- FIG 3: eine erste Identifikationsmarke mit drei passiven Transpondern;
- FIG 4: die Seitenansicht der ersten Identifikationsmarke aus FIG 3 in einer Explosionsdarstellung;
- FIG 5: eine zweite Identifikationsmarke mit zwei passiven Transpondern;
- FIG 6: die Seitenansicht der zweiten Identifikationsmarke aus FIG 5 in einer Explosionsdarstellung;
- FIG 7: eine dritte Identifikationsmarke mit sechs passiven Transpondern; und
- FIG 8: die Seitenansicht der dritten Identifikationsmarke aus FIG 7 in einer Explosionsdarstellung.

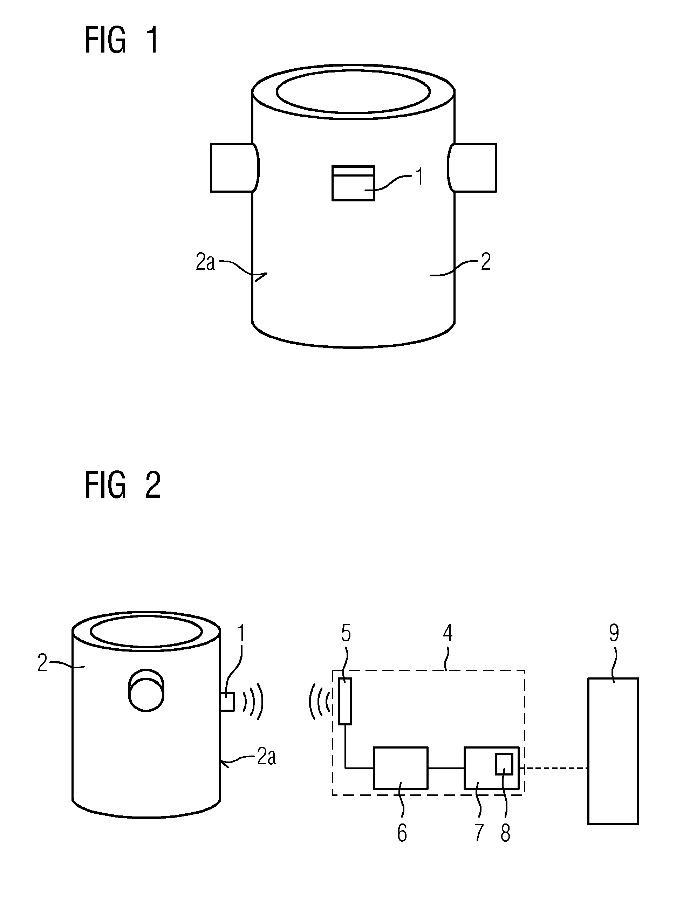

FIG 1 zeigt ein metallurgisches Gefäß 2 mit einer Identifikationsmarke 1, die an der äußeren Oberfläche 2a des metallurgischen Gefäßes 2 angeordnet ist.

FIG 2 zeigt eine Lesestation 4 in drahtloser Kommunikation mit der Identifikationsmarke 1 gemäß FIG 1. Gleiche Bezugszeichen kennzeichnen gleiche Elemente. Die Lesestation dient dem Auslesen der passiven Transponder der Identifikationsmarke 1 und umfasst eine Antenne 5, eine Leseeinheit 6 zur Erkennung der passiven Transponder und eine Auswerteeinheit 7 zur Ermittlung und Ausgabe eines Verschleißzustandes der Identifikationsmarke 1. Die Auswerteeinheit 7 weist eine Anzeigeeinheit 8 zur Anzeige des ermittelten Verschleißzustandes der Identifikationsmarke 1 auf. Die Auswerteeinheit 7 ist optional datentechnisch mit einem Managementsystem 9 verbunden, in welchem ein Einsatz- und Fahrplan für das metallurgische Gefäß 2 hinterlegt ist.

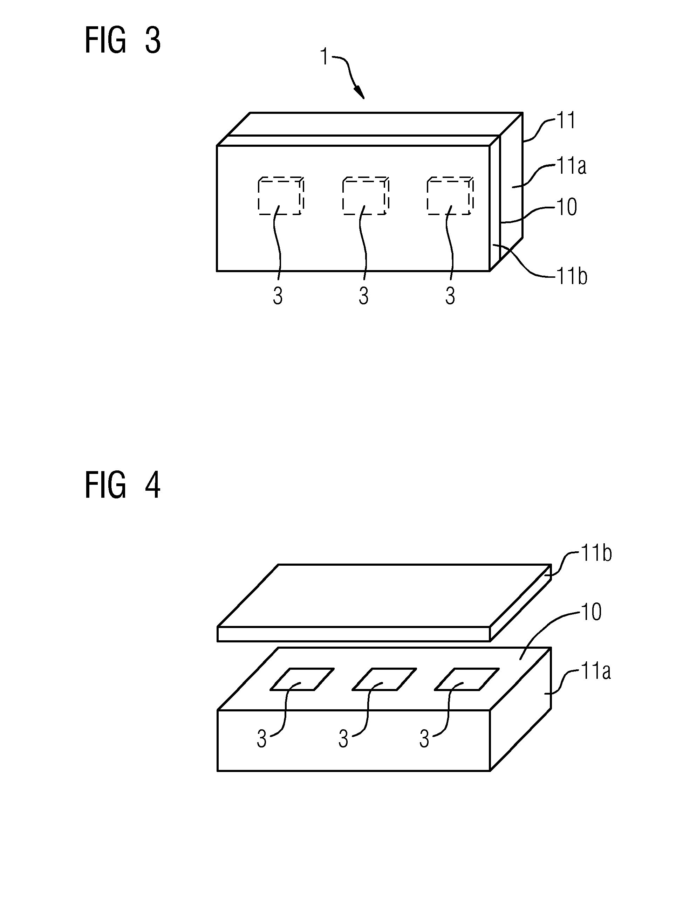

FIG 3 zeigt eine erste Identifikationsmarke 1 mit einer Trägermatrix 11 und drei passiven Transpondern 3, die beabstandet nebeneinander auf einer Ebene 10 in die Trägermatrix eingebettet angeordnet sind. Die Trägermatrix 11 umfasst dabei eine erste Lage 11a und eine dünnere zweite Lage 11b, an deren Kontaktflächen sich die Ebene 10 befindet.

FIG 4 zeigt die Seitenansicht der ersten Identifikationsmarke 1 aus FIG 3 in einer Explosionsdarstellung. Gleiche Bezugszeichen kennzeichnen gleiche Elemente.

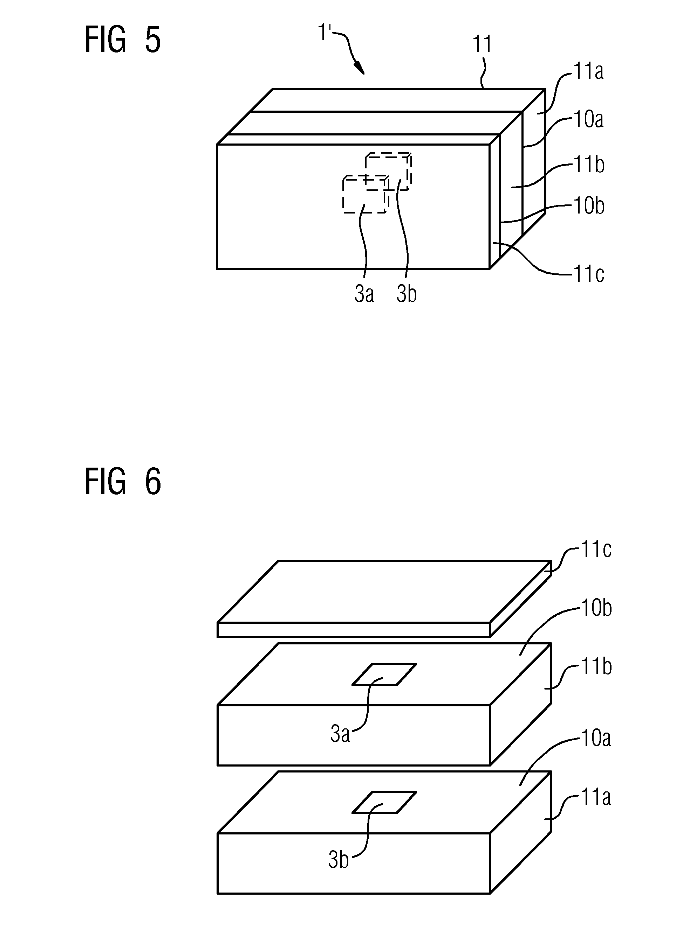

FIG 5 zeigt eine zweite Identifikationsmarke 1' mit einer Trägermatrix 11 und mit zwei passiven Transpondern 3a, 3b, die auf unterschiedlichen Ebenen 10a, 10b in der Trägermatrix eingebettet angeordnet sind. Die Trägermatrix 11 umfasst dabei eine erste Lage 11a, eine zweite Lage 11b und eine dünne dritte Lage 11c. Die erste Ebene 10a und der Transponder 3b befinden sich zwischen der ersten Lage 11a und der zweiten Lage 11b, während die zweite Ebene 10b und der Transponder 3a sich zwischen der zweiten Lage 11b und der dritten Lage 11c befinden.

FIG 6 zeigt die Seitenansicht der zweiten Identifikationsmarke 1' aus FIG 5 in einer Explosionsdarstellung. Gleiche Bezugszeichen kennzeichnen gleiche Elemente.

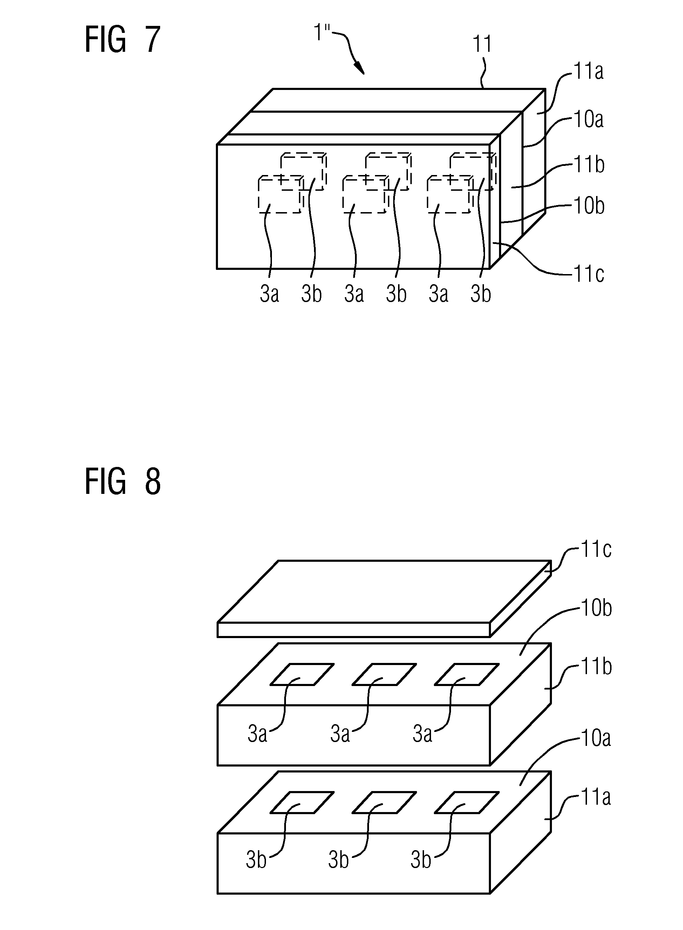

FIG 7 zeigt eine dritte Identifikationsmarke 1" mit einer Trägermatrix 11 und mit sechs passiven Transpondern 3a, 3b. Drei passive Transponder 3b sind beabstandet nebeneinander auf einer ersten Ebene 10a in die Trägermatrix 11 eingebettet angeordnet. Weiterhin sind drei passive Transponder 3a beabstandet nebeneinander auf einer zweiten Ebene 10b in die Trägermatrix 11 eingebettet angeordnet. Die Trägermatrix 11 umfasst dabei eine erste Lage 11a, eine zweite Lage 11b und eine dünne dritte Lage 11c. Die erste Ebene 10a und die Transponder 3b befinden sich zwischen der ersten Lage 11a und der zweiten Lage 11b, während die zweite Ebene 10b und die Transponder 3a sich zwischen der zweiten Lage 11b und der dritten Lage 11c befinden.

FIG 8 zeigt die Seitenansicht der dritten Identifikationsmarke 1" aus FIG 7 in einer Explosionsdarstellung. Gleiche Bezugszeichen kennzeichnen gleiche Elemente.

Die Anordnung der Transponder, die Form der Trägermatrix, die Anzahl der Lagen der Trägermatrix wie auch die Anordnung der Identifizierungsmarke an einem metallurgischen Gefäß usw. sind in den Figurendarstellungen lediglich beispielhaft gewählt und ohne weiteres veränderbar.

## Patentansprüche

1. Identifikationsmarke (1, 1', 1") zum Anbringen an einem metallurgischen Gefäß (2), wobei die Identifikationsmarke (1, 1', 1") eine Trägermatrix (11) aufweist, in welche mindestens zwei passive Transponder (3, 3a, 3b) eingebettet angeordnet sind, und wobei die mindestens zwei passiven Transponder (3, 3a, 3b) auf einer Ebene (10) und/oder in unterschiedlichen Ebenen (10a, 10b) der Identifikationsmarke (1, 1', 1") angeordnet sind.

2. Identifikationsmarke nach Anspruch 1,
wobei die mindestens zwei passiven Transponder (3) beabstandet nebeneinander auf einer Ebene (10) angeordnet sind.

3. Identifikationsmarke nach Anspruch 1,
wobei mindestens zwei Ebenen (10a, 10b) vorhanden sind und wobei pro Ebene (10a, 10b) mindestens ein passiver Transponder (3a, 3b) angeordnet ist.

4. Identifikationsmarke nach Anspruch 3,
wobei mindestens zwei Ebenen (10a, 10b) vorhanden sind und wobei pro Ebene (10a, 10b) mindestens zwei passive Transponder (3a, 3b) beabstandet nebeneinander angeordnet sind.

5. Identifikationsmarke nach einem der Ansprüche 1 bis 4,
wobei mindestens drei passive Transponder (3, 3a, 3b) vorhanden sind.

6. Identifikationsmarke nach einem der Ansprüche 1 bis 5,
wobei die Trägermatrix (11) aus einzelnen Lagen (11a, 11b, 11c) aufgebaut ist, wobei eine Ebene (10a, 10b) sich zwischen zwei benachbarten Lagen (11a, 11b; 11b, 11c) der Trägermatrix (11) befindet, und wobei mindestens zwei Lagen (11a, 11b, 11c) der Trägermatrix (11)eine unterschiedliche Dicke aufweisen.

7. Metallurgisches Gefäß (2) mit einer äußeren Oberfläche (2a), wobei eine Identifikationsmarke (1, 1', 1") nach einem der Ansprüche 1 bis 6 an der äußeren Oberfläche (2a) angeordnet ist.

8. Metallurgisches Gefäß nach Anspruch 7,
wobei die Identifikationsmarke (1, 1', 1") eine Trägermatrix (11) mit mehreren Lagen (11a, 11b, 11c) aufweist, wobei die Dicke der Lagen (11a, 11b, 11c) mit zunehmendem Abstand von der äußeren Oberfläche (2a) abnimmt.

9. Lesestation (4) zum Auslesen der mindestens zwei passiven Transponder (3, 3a, 3b) einer Identifikationsmarke (1, 1', 1"), welche an einem metallurgischen Gefäß (2) nach einem der Ansprüche 7 oder 8 angeordnet ist, wobei die Lesestation (4) mindestens eine Antenne (5), eine Leseeinheit (6) zur Erkennung der mindestens zwei passiven Transponder (3, 3a, 3b) und eine Auswerteeinheit (7) zur Ermittlung und Ausgabe eines Verschleißzustandes der Identifikationsmarke (1, 1', 1") aufweist.

10. Lesestation nach Anspruch 9,
wobei die Auswerteeinheit (7) eine Anzeigeeinheit (8) zur Anzeige des ermittelten Verschleißzustandes der Identifikationsmarke (1, 1', 1'') aufweist.

11. Lesestation nach Anspruch 9 oder Anspruch 10,
wobei die Auswerteeinheit (7) datentechnisch mit einem Managementsystem (9) verbunden ist, in welchem ein Einsatz- und Fahrplan für das metallurgische Gefäß (2) hinterlegt ist.

12. Verfahren zur Ermittlung eines Verschleißzustandes einer Identifikationsmarke (1, 1', 1"), welche an einem metallurgischen Gefäß (2) nach einem der Ansprüche 7 oder 8 angeordnet ist, mittels einer Lesestation (4) nach einem der Ansprüche 9 bis 11, wobei
- eine Gesamtanzahl und/oder Ausgangslage der in der Identifikationsmarke (1, 1', 1") vorhandenen passiven Transponder (3, 3a, 3b) in der Leseeinheit (6) und/oder der Auswerteeinheit (7) hinterlegt ist,
- die mindestens eine Antenne (5) eine Aktivierung der mindestens zwei passiven Transponder (3, 3a, 3b) initiiert,
- die Leseeinheit (6) die aktivierten passiven Transponder (3, 3a, 3b) erkennt und ausliest und das Ergebnis an die Auswerteeinheit (7) übermittelt,
- die Auswerteeinheit (7) eine aktuelle Anzahl und/oder aktuelle Lage der aktivierten passiven Transponder (3, 3a, 3b) in der Identifizierungsmarke (1, 1', 1") ermittelt und mit der Gesamtanzahl und/oder Ausgangslage der vorhandenen passiven Transponder (3, 3a, 3b) vergleicht, und wobei die Auswerteeinheit (7) bei Vorliegen einer Abweichung zwischen der aktuellen Anzahl und der Gesamtanzahl und/oder der aktuellen Lage und der Ausgangslage der Identifikationsmarke (1, 1', 1") einen definierten Verschleißzustand zuordnet.

13. Verfahren nach Anspruch 12,
wobei der Verschleißzustand der Identifikationsmarke (1, 1', 1") mittels der Anzeigeeinheit (8) ausgegeben wird.

14. Verfahren nach einem der Ansprüche 12 oder 13,
wobei die Auswerteeinheit (7) auf Basis des Verschleißzustandes der Identifikationsmarke (1, 1', 1") und des Einsatz- und Fahrplans des metallurgischen Gefäßes (2) weiterhin einen optimalen Termin zum Austausch der Identifikationsmarke (1, 1', 1") ermittelt und ausgibt.
